# EUROPEAN PATENT APPLICATION

(11) **EP 0 791 526 A2**
(43) Date of publication of application: **27.08.1997**
(21) Application number: 97300617.4
(22) Date of filing: 30.01.1997
(51) Int. Cl.: B62D 25/18

(54) **A wheel guard assembly**

(30) Priority: 20.02.1996 GB 9603495
(71) Applicant: Boydell & Jacks Limited, Burnley, Lancashire BB11 2HW (GB)
(72) Inventor: Jacks, Stephen A., Barrowford Nelson Lancashire BB9 8RF (GB)
(74) Representative: Every, David Aidan

(57) **Abstract**

A wheel guard assembly (3) comprises a mudguard (4) with a depending mudflap (7) which is retractable into the mudguard (7). The mudflap is slidingly connected to the mudguard and may be clamped to the mudguard at any desired height above the ground. Spray suppressant feature may be provided on the mudflap. The assembly permits the mudflaps of a vehicle to be retracted when there is a risk of them being damaged by contact with the ground. The height of the mudflap above the ground varies with the load a vehicle is carrying and can thus be adjusted to a desired level regardless of the load.

## Description

The present invention relates to a wheel guard assembly and more particularly to a mudguard assembly for a vehicle.

It is well known to dispose mudflaps behind the wheels of a vehicle in order to catch mud and to prevent spray being projected backwards by the vehicle's wheels into oncoming traffic. Such mudflaps are generally fixed to the wheel mudguard.

In certain driving circumstances mudflaps can become seriously damaged. One example is where the vehicle is reversing over rough terrain or up a steep incline (for example the boarding ramp of a ferry). In such cases the mudflap comes into contact with the ground and may be damaged or even detached from the mudguard.

Moreover, many countries have road spray suppression regulations for commercial vehicles which stipulate that mudflaps must meet certain dimensional criteria including a maximum permissible height a lower edge of the mudflap can be from the ground. It will be appreciated that the height of a mudflap above the ground will vary with the weight of the load carried by the vehicle and angle of the vehicle relative to the ground.

According to the present invention there is provided a wheel guard assembly comprising a wheel guard and a flap retractable into the wheel guard.

The flap may be slidably connected to the wheel guard and may be releasably fixed to the wheel guard in a selected position relative thereto. Thus the height of the flap relative to the ground may be adjusted to a desired position whereat it is releasably fixed to the wheel guard.

The flap preferably has at least one slot and may be connected to the wheel guard by means of a fixing which passes through said slot. The fixing may be operable to secure the flap to the wheel guard to prevent relative movement.

Preferably the fixing comprises a clamp which is operable by means of a toggle action over-centre lever. The clamp comprises a stud attached to the lever, the stud supporting a resilient member between the flap and an abutment member so that in a clamping configuration the resilient member is compressed against the flap by the abutment member.

Alternatively the wheel guard may have a return lip on which the flap is seated in a retracted position.

In a further alternative embodiment the flap may be retained in a retracted position by means of an elongate flexible element connected between the flap and wheel guard.

The flap may have a spray suppressant surface.

A specific embodiment of the present invention will now be described, by way of example only, with reference to the accompanying drawings in which:
Figure 1 is a scrap side view of a vehicle fitted with a wheel guard assembly of the present invention;
Figure 2 is a fragmented perspective exploded view of a wheel guard assembly in accordance with a first embodiment of the present invention;
Figure 3 is a cut-away view of an end of the wheel guard assembly (when assembled) looking in the direction of arrow X of figure 2 and includes a magnified view in the inset;
Figure 4 is a sectioned view taken along line Y-Y of the assembly figure 3;
Figure 5 is a sectioned view of a fixing arrangement of the wheel guard assembly taken along line ZZ of figure 3;
Figure 6 is a sectioned view of a fixing arrangement taken along line QQ of figure 3, the fixing arrangement being shown in a released configuration;
Figure 7 shows the fixing arrangement of figure 6 in a clamped configuration;
Figure 8 shows a perspective scrap view of a second embodiment of the present invention;
Figure 9 shows a perspective scrap view of a third embodiment of the present embodiment;
Figure 10 shows a perspective scrap view of a fourth embodiment of the present invention;
Figure 11 shows a perspective scrap view of a wheel flap of the present invention illustrating its spray suppressant surface;
Figure 12 is a sectioned view of the wheel flap of figure 11 ; and
Figure 13 is a perspective scrap view of a wheel flap embodiment showing an alternative embodiment of a spray suppressant surface.

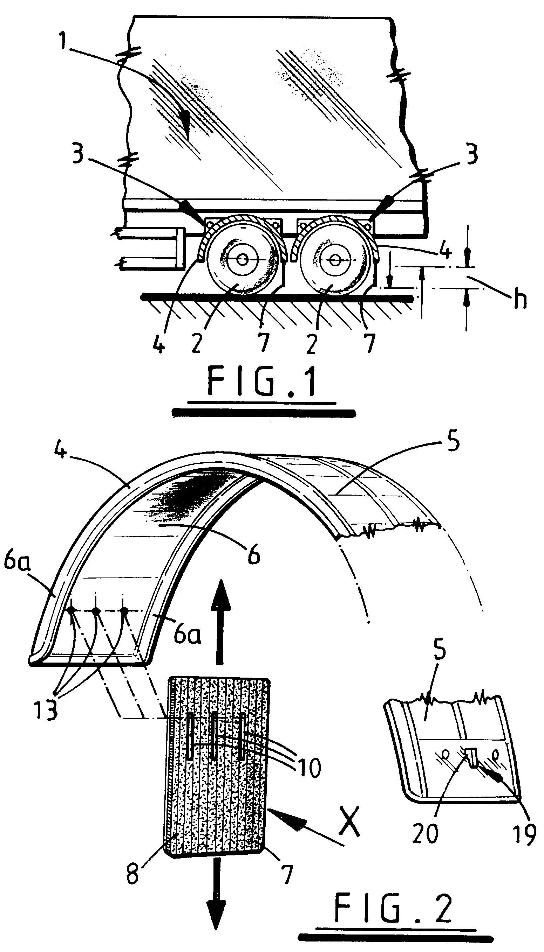

Referring now to the drawings, figure 1 shows part of a vehicle body I with two wheels 2 each having a mudguard assembly 3.

Each mudguard assembly 3 comprises an arcuate mudguard 4 with upper and lower surfaces 5,6, depending side skirts 6a and a single depending mudflap 7 behind each wheel. As will be explained in detail below each mudflap 7 is adjustable in height relative to the ground through the distance indicated by the letter h in figure 1.

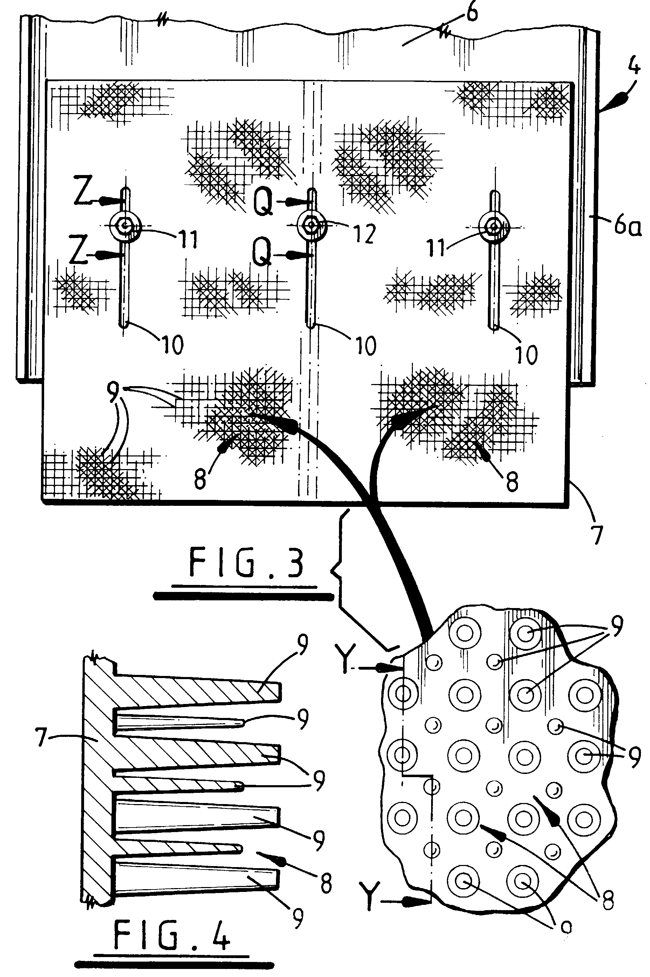

Referring to figures 2, 3 and 4, the mudflap 7 is of rectangular configuration and is disposed in partial abutment with the lower surface 6 of the mudguard 4. The mudflap 7 furnished with integral spray suppressant features 8 on its wheel-facing surface which in the embodiment shown in figures 3 and 4 are in the form of a plurality of resilient spikes 9 projecting from the mudflap 7 towards the wheel. Such spray suppressant features 8 are known and will not be described in detail here. Each mudflap 7 has three laterally spaced vertical slots 10 and is connected to the mudguard 4 by means of two outer bolts 11 and a central clamp 12 which pass through the respective slots 10 and three corresponding apertures 13 towards one edge of the mudguard 4.

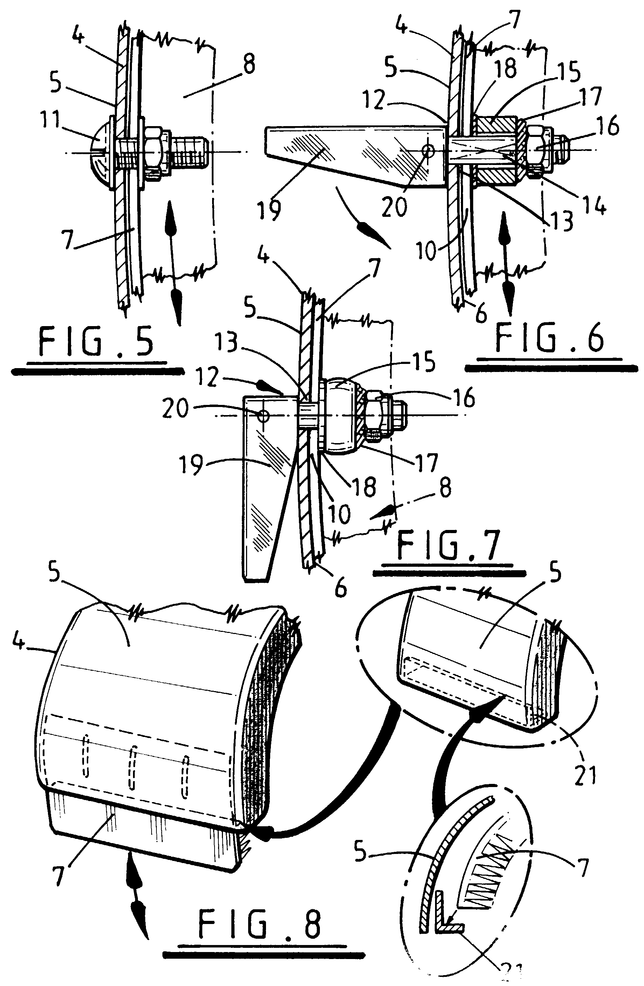

The bolts 11, shown in figure 5, are secured by nuts which are not fastened tight. The clamp 12 comprises a stud 14 fitted with a resilient sleeve 15 of elastomeric material as is shown in figures 6 and 7. The sleeve 15 is interposed between washers 17 and 18 and is retained on the stud 14 by means of a nut 16. One end of the stud 14 projects from the upper surface 5 of the mudguard 4 and has an over-centre toggle lever 19 pivotally connected thereto by means of a pin 20 which extends through a transverse bore in the stud 14. Figure 6 shows the clamp 12 in a released configuration in which the mudflap 4 is loosely retained on the mudguard 4 and is free to slide relative thereto (indicated by double-headed arrows in figures 5 and 6) by means of the slots 10 passing over the bolts 11 and stud 14. In figure 7 the clamp 12 is shown in a clamping configuration with the toggle lever 19 pivoted through substantially 90 degrees. In moving from the released to the clamping configuration the toggle lever 19 draws the stud 14, nut 16 and washer 17 to the left (as shown in figures 6 and 7) so that the resilient sleeve 15 is compressed between the washers 17,18. In this configuration the mudflap 7 is clamped tight against the mudguard 4 and is restrained from sliding movement relative thereto.

It will be seen that the mudflap 7 can be adjusted as required to any desired height above the ground by releasing the clamp 12, sliding the mudflap 7 between the side skirts 6a over the lower surface 6 of the mudguard 4 to the desired position and securing it again by pivoting the toggle lever 19 to the clamping position. If desired the mudflap 7 can be completely retracted into the mudguard 4 so that it does not depend therefrom.

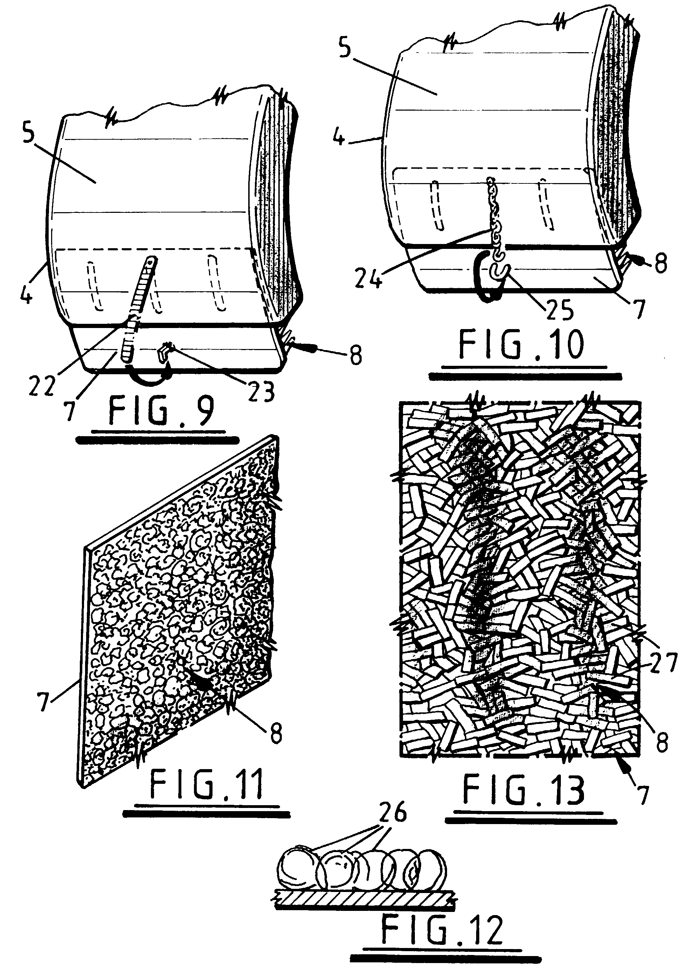

Alternative mudflap 7 retaining mechanisms are shown in figures 8 to 10. In figure 8 the end of the mudguard 4 has a return lip 21 which may be integral therewith or secured thereto. When the mudflap 7 is in a fully retracted position it is seated on and retained by the return lip 21. In the embodiment of figure 9 a flexible strap 22 is attached to the upper surface of the mudguard 4 and may be used to restrain the mudflap 7 in a retracted position by fastening it to a lug 23 on the mudflap 7. A similar design is shown in the embodiment of figure 10 in which the strap 22 is replaced by a chain 24 which may hook over an eye 25 on the mudflap 7.

Figures 11 to 13 show that the present invention may be used in relation to a mudflap 7 with any known spray suppressant surface 9. In figures 11 and 12 there is shown a known surface comprising a plurality of interleaved plastic loops 26. Figure 13 shows an alternative spray suppressant surface comprising a plurality of upstanding randomly directed plastics strands 27.

It will be seen that the present invention permits the mudflap of a vehicle to be retracted into the mudguard to prevent it from becoming damaged when passing over rough terrain or up steep inclines. The mudflap is easily released to its extended position once the danger of damage has passed. Moreover, the height of the mudflap above the ground can be adjusted to accord to local regulations regardless of the load being transported.

It will be appreciated that numerous modifications to the above described design may be made without departing from the scope of the invention as defined in the appended claims. For example, it is conceivable that the mudflap may be mounted so that it abuts and is slideable over the outer surface of the mudguard.

## Claims

1. A wheel guard assembly comprising a wheel guard and a flap retractable into the wheel guard.

2. A wheel guard assembly according to claim 1, wherein the flap is slidably connected to the wheel guard.

3. A wheel guard assembly according to claim 1 or 2, wherein the flap is releasably securable to the wheel guard in a selected position relative thereto.

4. A wheel guard assembly according to claim 1,2 or 3, wherein the flap has at least one slot and is connected to the wheel guard by means of a fixing which passes through said slot.

5. A wheel guard assembly according to claim 4, wherein the fixing is operable to secure the flap to the wheel guard to prevent relative movement.

6. A wheel guard assembly according to claim 5, wherein the fixing comprises a clamp.

7. A wheel guard assembly according to claim 6, wherein the clamp is operable by means of a toggle action over-centre lever.

8. A wheel guard assembly according to claim 7, wherein the clamp comprises a stud attached to the lever, the stud supporting a resilient member between the flap and an abutment member so that in a clamping configuration the resilient member is compressed against the flap by the abutment member.

9. A wheel guard assembly according to claim 1, 2 or 3, wherein the wheel guard has a return lip on which the flap is seated in a retracted position.

10. A wheel guard assembly according to claim 1, 2 or 3, wherein the flap is retained in a retracted position by means of an elongate flexible element connected between the flap and wheel guard.

11. A wheel guard assembly according to any preceding claim. wherein the flap has a spray suppressant surface.

12. A wheel guard assembly substantially as hereinbefore described with reference to the accompanying drawings.
